# FASCICULE DE BREVET EUROPEEN

(11) **EP 1 168 467 B1**
(45) Date de publication et mention de la délivrance du brevet: **12.10.2011**
(21) Numéro de dépôt: 01202255.4
(22) Date de dépôt: 12.06.2001
(51) Int. Cl.: H01M 2/10, H02J 7/00

(54) **Dispositif d'alimentation d'un appareil portatif susceptible d'utiliser différents types d'alimentation**
Stromversorgungsvorrichtung für unterschiedliche Stromversorgungstypen eines tragbaren Gerätes
Power supply device of a portable apparatus capable to use different supply types

(30) Priorité: 20.06.2000 FR 0007863
(43) Date de publication de la demande: 02.01.2002
(73) Titulaire: NXP B.V., 5656 AG Eindhoven (NL)
(72) Inventeur: Pautet, Franck, 75008 Paris (FR); Avoie, Fabrice, 75008 Paris (FR)
(74) Mandataire: Zapalowicz, Francis

(56) Documents cités:
- EP-A- 0 493 253
- WO-A-97/45900
- US-A- 3 856 577
- US-A- 5 015 546
- US-A- 5 661 392
- US-A- 6 014 009

## Description

### Domaine de l'invention

L'invention se rapporte au domaine des appareils portatifs fonctionnant avec l'énergie électrique. On pense en particulier aux téléphones mobiles, mais aussi à tous les systèmes de télécommande des appareils commandables à distance, par exemple, par une personne portant un dispositif de télécommande correspondant.

### Art antérieur et problème posé

Dans les appareils portatifs, tels que les téléphones mobiles, il est d'usage d'utiliser un boîtier ou bloc d'alimentation monté, de façon amovible ou non, sur le corps de l'appareil portatif. L'utilisateur de l'appareil portatif se doit de veiller au fait que le dispositif d'alimentation de son appareil est toujours opérationnel pour alimenter celui-ci en électricité.

On connaît différents types de dispositifs d'alimentation utilisant notamment des piles primaires, c'est-à-dire non rechargeables et jetables après utilisation, et également des piles secondaires, c'est-à-dire rechargeables, telles qu'une batterie rechargeable, appelée, en anglais « battery pack ». Des boîtiers d'appareils portatifs capables de recevoir soit des piles primaires, soit des batteries de piles secondaires, sont donc connus. En d'autres termes, le boîtier est conformé pour recevoir ces deux types de piles électriques, mais l'opérateur doit effectuer lui-même le remplacement des piles d'un type par celles d'un autre, notamment le remplacement de piles usées par des piles neuves. A cette occasion, il est susceptible de se tromper dans le montage des piles dans le boîtier. Il est alors utile pour lui de disposer de moyens de détrompage, afin qu'il ne puisse pas effectuer un mauvais montage. On note que, lorsqu'un ensemble de piles secondaires, tel qu'une batterie rechargeable, est déchargé, l'usager les recharge au moyen d'un chargeur de batterie qui est généralement livré avec l'appareil portatif. Ainsi, lorsque le dispositif d'alimentation ne fournit plus d'électricité, plusieurs solutions s'offrent à l'usager, telles que celles consistant à recharger les piles secondaires, c'est-à-dire la batterie rechargeable, lorsque celles-ci sont déchargées, soit utiliser des piles primaires achetées dans le commerce, par exemple lorsque le chargeur de batterie a été oublié.

Un tel type de dispositif ou « bloc » d'alimentation est décrit dans la demande de brevet européen EP-0 858 172. Le bloc d'alimentation comprend principalement une cavité dans laquelle peuvent être placés les deux types de piles. Un premier connecteur est destiné à coopérer avec un deuxième connecteur incorporé à la batterie rechargeable. Toutefois, une pièce adaptatrice amovible est nécessaire pour assurer la liaison entre le premier collecteur et les piles primaires quand celles-ci sont utilisées et placées dans la cavité. Ceci nécessite, bien entendu, la mise en place correcte de cette pièce amovible, ce qui entraîne la manipulation de cette dernière et, en conséquence, des risques de la perdre ou de l'endommager.

Un premier but essentiel de l'invention est de remédier à cet inconvénient en proposant un dispositif d'alimentation pour appareil portatif susceptible de recevoir les deux types de piles sans nécessiter l'utilisation ou la manipulation, par l'utilisateur, d'une pièce amovible adaptatrice.

### Résumé de l'invention

A cet effet, l'objet principal de l'invention est un dispositif d'alimentation d'un appareil portatif susceptible d'utiliser différents types l'alimentation tel que revendiqué dans la revendication 1

Une réalisation principale de la plupart des plots prévoit que ceux-ci ont une forme en col de cygne, permettant ainsi une grande flexibilité sans dépasser la limite élastique du matériau utilisé.

Toutefois, pour rigidifier certains de ces plots de contact flexibles, leur extrémité est, de préférence, élargie de manière à pouvoir être fixée dans le corps pour constituer des plots de contact précontraints.

Il est prévu d'utiliser également des deuxièmes moyens de détrompage pour le montage des piles primaires constitués d'un plot de contact large, rigide, placé entre deux premiers moyens de détrompage et dont la partie centrale non conductrice est constituée d'une butée placée à une distance des bords de l'encoche du plot de contact de pile correspondant plus petite que la longueur déterminée des piles. Dans ce dernier cas, le plot de contact n'a pas une forme en col de cygne.

Dans la réalisation principale de l'invention, il est prévu d'utiliser un plot de contact supplémentaire pour identifier les chargeurs de batteries, de même qu'un circuit électronique, permettant de reconnaître des chargeurs de batteries équipés d'un composant à coefficient de température négatif (NTC) et de connecter la batterie rechargeable et le circuit de charge situé sur un circuit imprimé de l'appareil portatif destiné à être relié à un chargeur.

Il est également prévu d'utiliser dans chaque batterie rechargeable un interrupteur thermique pour protéger cette batterie rechargeable d'une opération de chargement excessif.

### Liste des figures

L'invention et ses différentes caractéristiques techniques seront mieux comprises à la lecture de la description suivante d'une réalisation de l'invention, accompagnée de quelques figures représentant respectivement :
- figure 1, en vue éclatée, le dispositif d'alimentation selon l'invention installé dans un appareil mobile et accompagné de deux types de piles ;
- figure 2, le premier type de plots de contact, dits « de batterie », utilisé pour identifier les batteries rechargeables ;
- figure 3, le deuxième type de plots de contact, dits « mixtes », utilisés à la fois pour les piles et la batterie rechargeable ;
- figure 4, le troisième type de plots de contact, dit « double », utilisé pour les piles ;
- figure 5, le quatrième type de plots de contact, dit également « double », utilisé pour les piles ; et
- la figure 6, le montage de piles avec le dispositif d'alimentation selon l'invention.

### Description détaillée d'une réalisation de l'invention

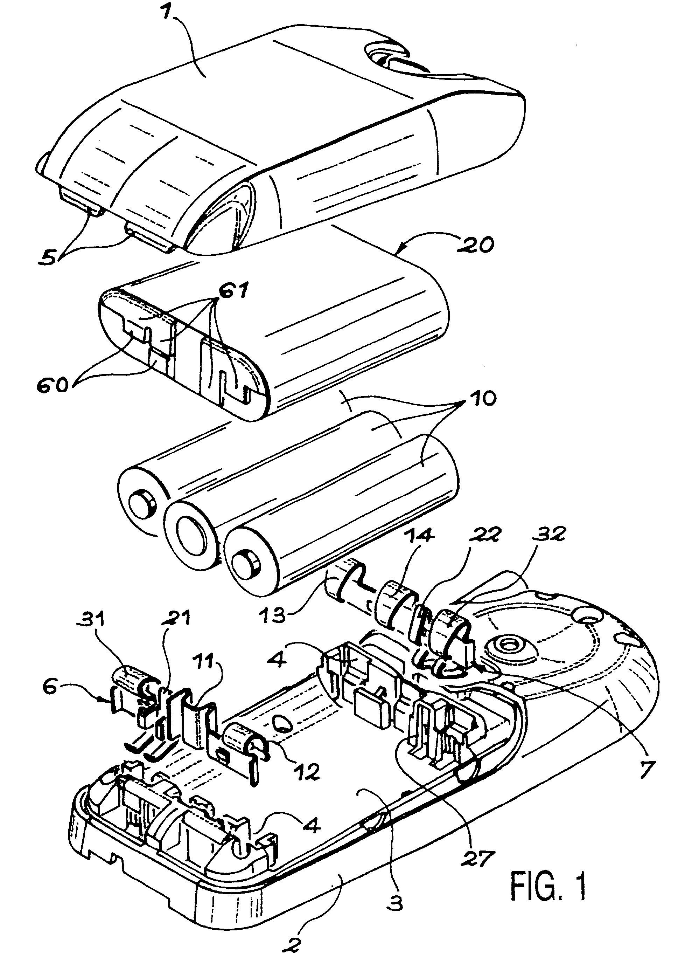

En se reportant d'abord à la figure 1, il est facile de se rendre compte du type de matériel auquel se rapporte l'invention. En effet, on distingue sur cette figure 1 un couvercle 1 devant venir se fixer sur un boîtier d'appareil 2, au moyen de deux tenons 5, après que soit installé, dans une cavité 3 du boîtier d'appareil 2, soit un jeu de trois piles primaires 10, soit une batterie rechargeable 20. La vue de type éclatée permet de distinguer les principaux éléments de l'appareil mobile du dispositif selon l'invention et les piles ou batterie utilisées.

On peut distinguer deux séries de plots de contact, l'une repérée 6, que l'on nommera « série de pieds », et 7, que l'on nommera « série de tête ». Chacune de ces séries 6 et 7 est placée de part et d'autre de la cavité 3, dans un ensemble d'encoches 4 moulées dans le boîtier d'appareil 2. L'agencement de chacune de ces deux séries 6 et 7, et notamment la forme des différents plots de contact qui les constituent, font qu'elles permettent d'accueillir, soit le jeu de trois piles primaires 10 de type standard, notamment du type référencé " R6 " par les normes, soit d'une batterie rechargeable 20 dont la forme doit être compatible avec la forme des différents plots de contact et leur positionnement.

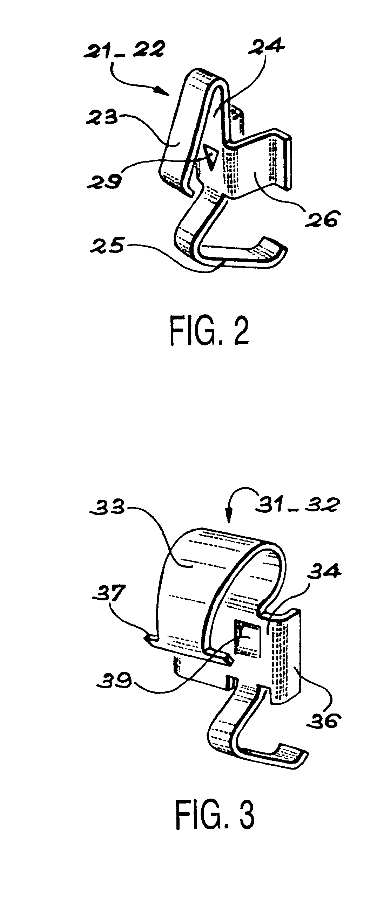

La forme de chacun des plots est représentée par une des figures 2 à 5.

La figure 2 représente un premier type de plots de contact, dit de batterie, à savoir les plots de contact repérés 21 et 22 sur la figure 1. L'un d'entre eux est destiné à identifier le type batterie rechargeable placée dans la cavité 3, au moyen d'un circuit d'identification de la résistance électrique de ladite batterie rechargeable, situé dans le circuit imprimé. Il est ainsi possible de reconnaître différents types de batteries rechargeables, notamment celles équipées d'un composant « NTC » satisfaisant aux normes américaines. L'autre sert de connexion entre le plot de charge de la batterie rechargeable et le circuit de charge situé sur le circuit imprimé, qui est lui-même relié au chargeur, lorsque celui-ci est branché. Lorsqu'ils sont montés sur le boîtier d'appareil 2, ces plots de contact de batterie sont mis en connexion électrique avec la carte de circuits imprimés de l'appareil comportant un circuit d'identification de résistance électrique.

En référence à la figure 1, on constate que ces deux plots de contact de batterie 21 et 22 sont placés chacun entre deux plots de contact, respectivement, 11 et 31, 14 et 32. Toutefois, on notera que la position de leur lame de contact est légèrement moins proéminente que celle des deux contacts entre lesquels ils sont placés.

La figure 2 permet de mieux distinguer la forme des plots de contact de batterie 21 ou 22, et en particulier la forme de la lame de contact 23, qui est droite, légèrement inclinée par rapport à une partie centrale 24 et dont l'extrémité est légèrement recourbée. La fixation de ces plots de contact de batterie 21, 22 se fait au moyen d'une patte inférieure 25 dont l'extrémité recourbée permet d'accrocher une paroi de l'ensemble d'encoches, référencé 4 sur la figure 1. Le positionnement exact de ces deux plots de contact de batterie 21 et 22 se fait grâce à deux parties latérales 26 venant épouser un bossage 27 de l'ensemble d'encoches 4. Ainsi, ces plots de contact de batterie 21 et 22 peuvent être fixés et détachés facilement de leur emplacement.

En référence à la figure 3, on décrit un deuxième type de plots de contact, dit plots de contact mixtes, référencés 31 et 32 sur la figure 1. Ils sont positionnés sur le boîtier d'appareil 2, chacun à une extrémité d'une des deux séries de contact 6 et 7, de manière opposée et à côté d'un plot de contact de batterie 21 ou 22.

La figure 3 montre que leur lame de contact 33 est de forme bombée et se termine en col de cygne vers la partie qui la relie à une partie centrale 34 de ce plot de contact mixte. On note que cette lame de contact 33 a une largeur qui s'amincie au fur et à mesure que l'on s'approche de l'extrémité 37, mais que cette dernière est plus large. La position de tels plots mixtes se fait au moyen de deux parties latérales 36 recourbées pour épouser un bossage placé à une extrémité de chacun des ensembles d'encoches 4 et diamétralement opposé. Ces deux plots de contact mixtes 31 et 32 sont donc destinés à établir le contact entre les circuits de l'appareil mobile et aussi bien les piles primaires qu'une batterie rechargeable, mais ils constituent également les pôles positif et négatif du dispositif.

Ces deux premiers types de plots de contact sont donc utilisés pour alimenter électriquement l'appareil, lorsqu'une batterie rechargeable est utilisée.

Les contacts électriques pour un jeu de piles primaires, tels que celles utilisées dans le commerce, sont les plots de contact mixtes, déjà décrits en référence à la figure 3 et référencés 31 et 32 sur la figure 1, mais aussi les plots de contact double pour piles, 11, 12 et 13, 14 de la figure 1.

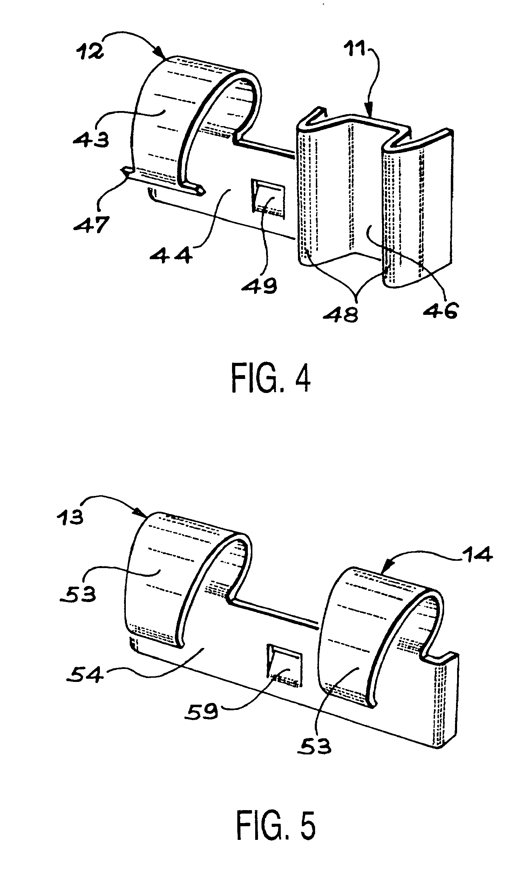

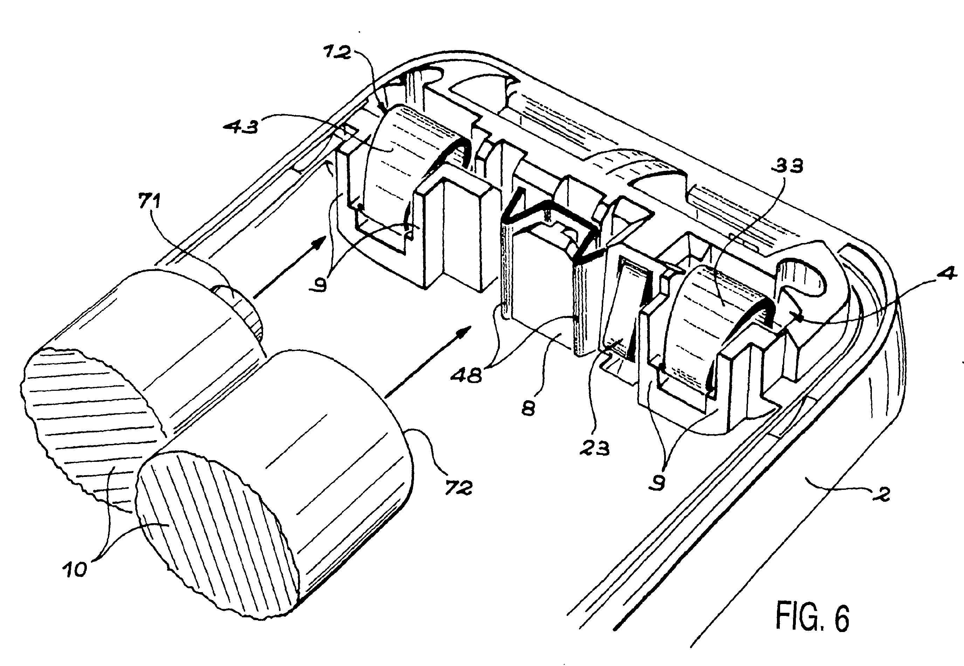

La figure 4 représente un premier de ces deux types de plots de contact double. Le premier contact 11 de ces plots de contact double est destiné à être inséré dans une fente de l'ensemble d'encoches 4 de la série de contacts de pieds 6 (figure 1). Il comprend principalement un fond 46 limité par deux rebords 48 proéminents. Comme le montre la figure 6, les arêtes aux sommets de ces deux rebords 48 doivent servir de contact à l'extrémité plane 72 d'une pile 10, qui doit être insérée entre deux autres piles 10 identiques.

Cette première partie de contact 11 du plot de contact mobile est rattachée à une partie centrale 44 à laquelle est également fixée une deuxième partie de contact 12. Sa lame 43 est du type de celle décrite à la figure 3, référencée 33, et affecte une forme en col de cygne. Ses fonctions sont exactement les mêmes que celles de la lame 33 du plot de contact mixte 31 ou 32.

Les extrémités 37 et 47 des lames 33 et 43 des deux types de plots de contact décrits par les figures 3 et 4 sont élargies pour pouvoir être bloquées par une partie fixe. La figure 6 permet de constater qu'une telle extrémité 47 d'une lame 43 est en appui dans une petite cavité d'un ensemble d'encoches 4, entre les rebords 9.

Ainsi, les lames 33 et 43 des plots de contact 12 et 31 sont maintenues en état de précontrainte, en une position déterminée en retrait par rapport à la profondeur de l'encoche dans laquelle chacune se trouve, pour éviter un contact avec l'extrémité plate d'une pile primaire et participer ainsi au détrompage. Enfin, cette précontrainte est nécessaire, car sans elle, il est difficile d'assurer que les lames 43 et 33 seront en retrait par rapport aux rebords 9, parce que les traitements thermiques infligés à ces lames (trempe 810°C et revenu 300°C) les déforment énormément.

En fait, l'extrémité 37 du plot de contact mixte, référencé 32 sur la figure 1, n'est pas bloquée dans le boîtier d'appareil 2 et n'est donc pas opérationnelle. Son existence permet d'obtenir l'unicité du type de plot de contact mixte pour abaisser le coût de production par l'utilisation d'un seul outil de découpe et de pliage.

La figure 5 montre le deuxième type de plot de contact double. On y retrouve une partie centrale 54 à laquelle sont reliés deux parties de contact 13 et 14 dont les lames 53 sont identiques à celle des plots de contact mixtes 31 ou 32 et à celle de la deuxième partie de contact 12 du double plot de contact, décrit à la figure 4. Leurs fonctions sont également identiques à ces lames 33 et 43, précédemment décrites.

On précise que les plots de contact doubles des figures 4 et 5 ne sont pas en contact avec le circuit imprimé et ne servent que pour les piles primaires. En effet, ils servent à faire la liaison entre les piles primaires placées sur les côtés du boîtier et la pile primaire se trouvant au milieu, mais aussi pour le détrompage du montage de ces piles primaires.

On remarquera que sur ces quatre réalisations décrites par les figures 2 à 5, chacun des plots de contact possède une languette 29, 39, 49, 59 obtenue par enfoncement partiel du métal constituant ces plots de contact. L'ouverture de la languette 29, 39, 49, 59 se fait vers le haut, de sorte que chacune d'elle constitue un système de blocage du plot de contact dans sa position, et qu'il est difficile d'enlever ce dernier de son emplacement, sans agir directement sur chacune de ces languettes 29, 39, 49 ou 59.

La figure 6 permet de mieux comprendre comment ces différents plots de contact sont installés et fixés dans le boîtier de l'appareil 2, et plus exactement dans un ensemble d'encoches 4.

Il est bon de noter que les piles primaires 10 devant être acceptées par ce boîtier sont fabriquées par différentes compagnies de pays différents et, de ce fait, leur longueur peut varier légèrement. Les lames et plots de contact qui les accueillent doivent donc faire preuve d'une certaine flexibilité pour accepter une petite différence de longueur, tout en assurant le contact électrique et le maintien en place des piles.

Le plot de contact 12 a sa lame 43 en forme de col de cygne placée entre deux rebords 9 de l'ensemble d'encoches 4, et ne dépasse pas de la cavité définie par ces deux rebords 9. De plus, l'écartement de ces deux rebords 9 de l'ensemble d'encoches 4 est supérieur à un plot de contact 71 de la pile 10, mais inférieur au diamètre de cette même pile 10. Toutefois, il est possible, pour l'utilisateur, de placer la pile dans le sens inverse à celui représenté sur la figure 6, mais le système de détrompage est le suivant. Si cette pile est placée dans le sens inverse, il n'y aura pas contact entre son extrémité plane 72 et la lame 33 du plot de contact, car elle touchera avant le rebord 9. C'est pour cela que la lame 33 du plot de contact en question est précontrainte et se trouve donc en retrait par rapport aux rebords 9. Cette remarque est également valable pour le détrompage de la pile placée au milieu. L'opérateur peut introduire la pile 10 par son plot de contact rond, mais il n'y aura pas contact entre celui-ci et le plot de contact 11 de la figure 1, donc l'appareil ne fonctionnera pas et l'opérateur vérifiera le sens d'introduction des piles, par ailleurs expliqué, grâce à un schéma directement dessiné dans le plastique du boîtier 2. Ceci constitue les premiers moyens de détrompage.

En ce qui concerne la pile 10 placée au milieu, son montage doit s'effectuer en sens inverse. De ce fait, le contact électrique sera assuré par l'arête des rebords 48 du double plot de contact. Une butée 8 moulée dans l'ensemble d'encoches 4 constitue des deuxièmes moyens de détrompage et permet également à l'opérateur de ne pas pouvoir y introduire la pile 10 par son plot de contact rond, mais par son extrémité plane sans plot 72. Ceci constitue les deuxièmes moyens de détrompage.

Il existe des piles secondaires de la batterie rechargeable qui n'ont pas le même diamètre que celui des piles de type R6. Dans ce cas, un élément espaceur, par exemple en plastique thermoformé, peut être utilisé.

La figure 1 permet de constater, sur la batterie rechargeable 20, l'existence de plaques de contact 60, de même que des fentes de positionnement 61 placées en correspondance, les plots de contact mixtes 31 et 32 se trouvent en correspondance de ces fentes, lorsque la batterie rechargeable est mise en place. Il y a impossibilité pour l'utilisateur de procéder à un montage ne correspondant pas à celui réclamé par le fonctionnement de l'appareil. De plus, les plaques de contact 60 permettent d'établir le contact électrique entre les plots de contact de batterie 21 et 22, mais aussi avec les plots de contact mixtes 31 et 32, positif et négatif.

La batterie rechargeable est conçue à des dimensions exactes définies par la cavité 3 du boîtier d'appareil 2 et la position des deux ensembles d'encoches 4. Elle utilise des contacts soudés pour connecter entre eux les différents éléments de piles secondaires les constituant. De plus, dans le but de protéger les batteries rechargeables, chacune d'entre elles possède un interrupteur thermique (thermo-switch), tout comme le composant à coefficient de température négatif NTC. Ceci permet d'éviter des problèmes de surcharge lors des opérations de chargement.

Pour éviter la destruction de l'appareil mobile, en particulier d'un téléphone portatif, on utilise également une diode placée entre le plot de contact mixte 31, positif, pour les piles primaires et le pôle positif de l'appareil portatif. On fait remarquer qu'un même plot de contact mixte 31 positif est utilisé à la fois pour les piles et pour les batteries rechargeables. En correspondance, le plot de contact mixte 32, diamétralement opposé au plot de contact mixte 31 est le seul plot de contact utilisé pour la mise à la terre.

On peut obtenir une grande élasticité en faisant subir aux lames 23, 33, 43, 53, de différents plots de contact, un traitement thermique, comme une trempe à 810°C et un revenu à 300°C pour l'acier XC 75 recouvert de cuivre ou de nickel. Un recouvrement de cuivre permet d'obtenir une très bonne liaison avec le nickel et un revêtement de nickel permet d'obtenir une très bonne résistance de contact entre le métal et les piles primaires et les batteries rechargeables dont les extrémités sont également faites de nickel.

### Avantages de l'invention

Le dispositif d'alimentation, selon l'invention, évite l'emploi d'une pièce amovible tout en permettant l'utilisation, à la fois de batteries rechargeables et de piles primaires.

Il accepte tous les standard de piles primaires de normes " R6 ".

Il évite le chargement excessif des batteries rechargeables.

Il permet de reconnaître le type de batteries rechargeables utilisé.

Enfin, les moyens de détrompage empêchent l'utilisateur d'effectuer un montage incorrect des piles primaires.

## Revendications

1. Dispositif d'alimentation d'un appareil portatif susceptible d'utiliser différents types d'alimentation et comportant un boîtier d'appareil (2) dans lequel se trouve une cavité principale (3) pouvant accueillir deux types de piles, c'est-à-dire soit au moins une pile primaire (10) d'une longueur déterminée, soit une batterie rechargeable (20), et dans laquelle se trouvent deux séries (6, 7) de plots de contact (11, 12, 13, 14, 21, 22, 31, 32) comportant des plots de contact mixtes (31, 32) et doubles (11, 12, 13, 14) ayant des lames pour mettre en contact les piles (10) ou la batterie rechargeable (20) avec des circuits d'utilisation de l'appareil portatif, sans utiliser d'élément adaptatif amovible supplémentaire le dispositif comprend en outre des premiers moyens de détrompage pour le montage des piles primaires (10) constitués par le fait que les lames (33 et 43) des plots de contact mixtes (31, 32) et double (11, 12, 13, 14) sont placées au fond d'une encoche délimitée par deux rebords (9) solidaires du boîtier d'appareil (2) et dont la profondeur est plus importante que la proéminence de chacune des lames (33, 43) des plots de contact et dont la largeur est supérieure aux plots de contact (71) de la pile (10), mais inférieure à la largeur de cette même pile (10), pour ne permettre qu'à l'extrémité de la pile (10) équipée d'un plot de contact (71) de venir en contact dans la rainure avec la lame (33, 43) du plot de contact correspondant.

2. Dispositif d'alimentation selon la revendication 1, **caractérisé en ce qu'**il utilise un premier type de plots de contact (12, 13, 14, 31, 32) et dont les lames (33, 43, 53) affectent une forme en col de cygne permettant ainsi une grande flexibilité sans dépasser la limite élastique du matériau utilisé.

3. Dispositif d'alimentation selon la revendication 2, **caractérisé en ce que** les extrémités (37, 47) de certains plots de contact (12, 31) sont élargies pour pouvoir être fixées par rapport au boîtier (2), dans le but de constituer des plots de contact précontraints.

4. Dispositif d'alimentation selon la revendication 3, **caractérisé en ce qu'**il comprend des deuxièmes moyens de détrompage des piles primaires (10) constitués d'un plot de contact large, rigide, au moyen de deux rebords (48) placés entre deux premiers moyens de détrompage et dont la partie centrale, non conductrice, constituée d'une butée (8) solidaire du boîtier (2) d'appareil, est placée à une distance des bords de l'encoche du plot de contact correspondant, plus petite que la longueur déterminée des piles primaires (10) devant être utilisées.

5. Dispositif d'alimentation selon la revendication 1, **caractérisé en ce qu'**il comprend un plot de contact de batterie (21, 22) dans chaque série (6, 7) de plots de contact pour identifier les chargeurs de batteries et connecter la batterie rechargeable (20) et le circuit de charge situé sur un circuit imprimé de l'appareil portatif destiné à être relié à un chargeur, de même qu'un circuit électronique permettant de reconnaître des chargeurs de batteries équipés du composant à coefficient de température négatif de type NTC.

6. Dispositif d'alimentation selon la revendication 1, **caractérisé en ce qu'**il comprend une diode entre un plot de contact mixte (31) et les circuits de l'appareil portatif.

7. Appareil portatif comprenant un dispositif selon l'une des revendications 1 à 6.

## Claims

1. Device for powering a portable apparatus capable of using different types of power supply and comprising an apparatus housing (2) containing a main cavity (3) that can accommodate two types of cell, that is to say either at least one primary cell (10) of a determined length, or a rechargeable battery (20) and in which there are two series (6, 7) of contact mounts (11, 12, 13, 14, 21, 22, 31, 32) comprising mixed contact mounts (31, 32) and double contact mounts (11, 12, 13, 14) having strips for placing the cells (10) or the rechargeable battery (20) in contact with circuits for the use of the portable apparatus without using any additional removable adaptive element; the device also comprises first polarizing means for the installation of the primary cells (10) consisting in that the strips (33 and 43) of the mixed contact mounts (31, 32) and double contact mounts (11, 12, 13, 14) are placed at the bottom of a notch delimited by two edges (9) secured to the apparatus housing (2) and the depth of which is greater than the protuberance of each of the strips (33, 43) of the contact mounts and the width of which is greater than the contact mounts (71) of the cell (10), but less than the width of this same cell (10), so as to allow only the end of the cell (10) fitted with a contact mount (71) to come into contact, in the groove, with the strip (33, 43) of the corresponding contact mount.

2. Power-supply device according to Claim 1, **characterized in that** it uses a first type of contact mount (12, 13, 14, 31, 32) and of which the strips (33, 43, 53) take on a gooseneck shape thus allowing a great flexibility without exceeding the elastic limit of the material used.

3. Power-supply device according to Claim 2, **characterized in that** the ends (37, 47) of certain contact mounts (12, 31) are widened in order to be able to be attached to the housing (2) for the purpose of forming prestressed contact mounts.

4. Power-supply device according to Claim 3, **characterized in that** it comprises second polarizing means of the primary cells (10) consisting of a wide, rigid contact mount by means of two edges (48) placed between two first polarizing means and of which the central, non-conductive portion consisting of an abutment (8) secured to the apparatus housing (2) is placed at a distance, from the edges of the notch of the corresponding contact mount, smaller than the determined length of the primary cells (10) that are to be used.

5. Power-supply device according to Claim 1, **characterized in that** it comprises a battery contact mount (21, 22) in each series (6, 7) of contact mounts in order to identify the battery chargers and connect the rechargeable battery (20) and the charging circuit situated on a printed circuit of the portable apparatus designed to be connected to a charger, as well as an electronic circuit making it possible to recognize battery chargers fitted with the negative temperature coefficient component of the NTC type.

6. Power-supply device according to Claim 1, **characterized in that** it comprises a diode between a mixed contact mount (31) and the circuits of the portable apparatus.

7. Portable apparatus comprising a device according to one of Claims 1 to 6.

## Patentansprüche

1. Vorrichtung zur Versorgung eines tragbaren Geräts, das verschiedene Versorgungstypen einsetzen kann, und umfassend ein Gerätegehäuse (2), in dem sich ein Haupthohlraum (3) befindet, der zwei Batterietypen aufnehmen kann, d.h. entweder mindestens eine Primärbatterie (10) mit einer bestimmten Länge oder eine aufladbare Batterie (20), und in dem sich zwei Reihen (6, 7) von Kontaktstücken (11, 12, 13, 14, 21, 22, 31, 32) befinden, umfassend gemischte (31, 32) und doppelte (11, 12, 13, 14) Kontaktstücke, die Lamellen besitzen, um die Batterien (10) oder die aufladbare Batterie (20) mit Nutzkreisen des tragbaren Geräts in Kontakt zu bringen, ohne ein zusätzliches abnehmbares Adapterelement zu verwenden, wobei die Vorrichtung ferner erste Unverwechselbarkeitsmittel für die Montage der Primärbatterien (10) umfasst, die **dadurch** gebildet sind, dass die Lamellen (33 und 43) der gemischten (31, 32) und doppelten (11, 12, 13, 14) Kontaktstücke am Boden einer Kerbe angeordnet sind, die von zwei mit dem Gerätegehäuse (2) verbundenen Rändern (9) begrenzt ist und deren Tiefe größer als der vorstehende Teil jeder der Lamellen (33, 43) der Kontaktstücke ist, und deren Breite größer als die Kontaktstücke (71) der Batterie (10) aber kleiner als die Breite eben dieser Batterie (10) ist, um es nur an dem Ende der Batterie (10), das mit einem Kontaktstück (71) versehen ist, zu ermöglichen, in der Nut mit der Lamelle (33, 43) des entsprechenden Kontaktstücks in Kontakt zu kommen.

2. Versorgungsvorrichtung nach Anspruch 1, **dadurch gekennzeichnet, dass** sie einen ersten Typ von Kontaktstücken (12, 13, 14, 31, 32) verwendet, deren Lamellen (33, 43, 53) schwanenhalsförmig sind und so eine große Flexibilität ermöglichen, ohne die Elastizitätsgrenze des verwendeten Materials zu überschreiten.

3. Versorgungsvorrichtung nach Anspruch 2, **dadurch gekennzeichnet, dass** die Enden (37, 47) gewisser Kontaktstücke (12, 31) erweitert sind, um in Bezug zum Gehäuse (2) befestigt werden zu können, um vorgespannte Kontaktstücke zu bilden.

4. Versorgungsvorrichtung nach Anspruch 3, **dadurch gekennzeichnet, dass** sie zweite Unverwechselbarkeitsmittel der Primärbatterien (10) umfasst, die von einem breiten, starren Kontaktstück mit Hilfe von zwei Rändern (48) gebildet sind, die zwischen zwei ersten Unverwechselbarkeitsmitteln angeordnet sind und deren Mittelteil, der nicht leitend und von einem mit dem Gerätegehäuse (2) verbundenen Anschlag (8) gebildet ist, in einem Abstand zu den Rändern der Kerbe des entsprechenden Kontaktstücks angeordnet ist, der kleiner als die bestimmte Länge der Primärbatterien (10), die verwendet werden müssen, ist.

5. Versorgungsvorrichtung nach Anspruch 1, **dadurch gekennzeichnet, dass** sie ein Batteriekontaktstück (21, 22) in jeder Reihe (6, 7) von Kontaktstücken umfasst, um die Batterieladegeräte zu identifizieren und die aufladbare Batterie (20) und den Ladekreis anzuschließen, der sich auf einer gedruckten Schaltung des tragbaren Geräts befindet, das dazu bestimmt ist, an ein Ladegerät angeschlossen zu werden, sowie eine elektronische Schaltung, die es ermöglicht, Batterieladegeräte zu erkennen, die mit dem Bauteil mit negativem Temperaturkoeffizienten des Typs NTC ausgestattet sind.

6. Versorgungsvorrichtung nach Anspruch 1, **dadurch gekennzeichnet, dass** sie eine Diode zwischen einem gemischten Kontaktstück (31) und den Schaltungen des tragbaren Geräts umfasst.

7. Tragbares Gerät, umfassend eine Vorrichtung nach einem der Ansprüche 1 bis 6.
